# EUROPEAN PATENT APPLICATION

(11) **EP 1 744 270 A1**
(43) Date of publication of application: **17.01.2007**
(21) Application number: 05254529.0
(22) Date of filing: 20.07.2005
(51) Int. Cl.: G06Q 10/00

(54) **System and method of wireless carpool scheduling**

(30) Priority: 24.06.2005 US 165844
(71) Applicant: Research In Motion Limited, Waterloo, Ontario N2L 3W8 (CA)
(72) Inventor: Sohm, Mark, Ontario, Canada N1E 4A8 (CA); Wilhelm, Kathryn, Ontario, Canada N1E 4A8 (CA); Vettor, Larry, Ontario, Canada N1H 6J1 (CA)
(74) Representative: Hibbert, Juliet Jane Grace

(57) **Abstract**

A system and method of wireless carpool scheduling for notifying a carpool schedule change instantly is disclosed. The method comprises the steps of opening up a carpool schedule web page from a carpool application, submitting a carpool schedule change, updating the carpool schedule web page, sending an email notification to the group of carpoolers, pushing a wireless notification to a plurality of mobile devices owned by the group of carpoolers. The system comprises a plurality of mobile devices for loading a carpool schedule web page corresponding to a carpool group from a carpool application and submitting a carpool schedule change, a wireless network, wireless carpool scheduling server for storing and providing carpool data related to one or more group of carpoolers, receiving the submitted carpool schedule change and sending an email notification and pushing a wireless notification with respect to the submitted carpool schedule change.

## Description

### Field of Application

The present application relates generally to the field of wireless communications and more particularly to a system and method of wireless carpool scheduling.

### Background

Traffic problems and air pollution caused by vehicles is a growing problem. Gas prices have increased in recent years. Carpooling has been a useful way of avoiding traffic jams, reducing air pollution, and saving on traveling costs. A carpool can be formed in different ways. In some cases, each carpooler takes a turn driving their own vehicle and being a driver, while in other cases there is only one driver.

Currently, there are many websites in existence that allow people to create a carpool with others who are traveling to and from similar locations. Carpoolers follow the schedule they establish when the carpool is created. If a carpooler is unable to travel in the carpool on a given day, he/she has to call other carpoolers to notify his change in advance. However, sometimes, it is difficult to communicate the change to other carpoolers, and in many cases it is not possible to notify last minutes changes. This can cause delays in departure time as the carpoolers wait for him/her.

It is also common for a carpooler to be unable to drive on their scheduled day. This may cause confusion, as the schedule need to be changed for the driver to switch with another carpooler and the other carpooler has to make their vehicle ready if they take turn to driving their own vehicle. Mental tracking of this situation is often error prone, which leads to inconsistencies that may cause dissension among the carpoolers.

A system and method disclosed herein provide a system and method of wireless carpool scheduling to obviate or mitigate at least some of the aforementioned disadvantages.

### Summary of the Invention

Generally, the present application provides a carpool scheduling system and method. A method of wireless carpool scheduling for notifying a carpool schedule change for a group of carpoolers comprises opening up a carpool schedule web page from an carpool application, submitting a carpool schedule change, updating the carpool schedule web page, sending an email notification to the group of carpoolers, pushing a wireless notification to a plurality of mobile devices owned by the group of carpoolers.

A system of wireless carpool scheduling for serving one or more group of carpoolers comprises a plurality of mobile devices for loading a carpool schedule web page corresponding to a carpool group from a carpool application and submitting a carpool schedule change, a wireless network communicably linked to the plurality of mobile devices, wireless carpool scheduling server communicably linked to the wireless network for storing and providing carpool data related to one or more group of carpoolers, receiving the submitted carpool schedule change and sending an email notification and pushing a wireless notification with respect to the submitted carpool schedule change, email server communicably linked to wireless carpool scheduling server via Internet for transmitting the email notification. The plurality of mobile devices receive the email notification and the wireless notification.

### Brief Description Of The Drawings

For a better understanding of the invention and to show more clearly how it may be carried into effect, exemplary embodiments of the invention will now be described, by way of example only, with reference to the attached figures, wherein:
Fig. 1 is a block diagram of a wireless carpool scheduling system according to an embodiment of the present application;
Fig. 2 is an exemplary carpool administration web page according to an embodiment of the present application;
Fig. 2a is an exemplary carpooler information request web page according to an embodiment of the present application;
Fig. 2b is an exemplary carpool group list web page according to an embodiment of the present application;
Fig. 2c is an exemplary carpool update web page according to an embodiment of the present application;
Fig. 3 is an exemplary carpool schedule web page according to an embodiment of the present application;
Fig.3a shows an exemplary change carpool status web page according to an embodiment of the present application;
Fig.3b shows an exemplary carpooler driving schedule web page according to an embodiment of the present application;
Fig. 3c shows an exemplary change driving status web page according to an embodiment of the present application;
Fig. 4 is a flowchart illustrating a process of driver assignment according to an embodiment of the present application;
Fig. 5 is a flowchart illustrating a process of adding a carpool according to an embodiment of the present application;
Fig. 6 is a flowchart illustrating a process of updating a carpool according to an embodiment of the present application;
Fig. 7 is a flowchart illustrating a process of carpool schedule change according to an embodiment of the present application;
Fig. 8 is a flowchart illustrating a process of driver change according to an embodiment of the present application; and
Fig. 9 shows an exemplary email notification according to embodiment of the present application.

Like reference numerals are used throughout the figures to denote similar elements and features.

### Detailed Description

It will be appreciated that for simplicity and clarity of illustration, where considered appropriate, reference numerals may be repeated among the figures to indicate corresponding or analogous elements. In addition, numerous specific details may be set forth in order to provide a thorough understanding of the invention. However, it will be understood by those of ordinary skill in the art that the invention may be practiced without these specific details. In other instances, well-known methods, procedures and components have not been described in detail so as not to obscure the invention.

The present application provides a carpool scheduling system and method. A method of wireless carpool scheduling for notifying a carpool schedule change for a group of carpoolers comprises opening up a carpool schedule web page from an carpool application, submitting a carpool schedule change, updating the carpool schedule web page, sending an email notification to the group of carpoolers, pushing a wireless notification to a plurality of mobile devices owned by the group of carpoolers.

A system of wireless carpool scheduling for serving one or more group of carpoolers comprises a plurality of mobile devices for loading a carpool schedule web page corresponding to a carpool group from a carpool application and submitting a carpool schedule change, a wireless network communicably linked to the plurality of mobile devices, wireless carpool scheduling server communicably linked to the wireless network for storing and providing carpool data related to one or more group of carpoolers, receiving the submitted carpool schedule change and sending an email notification and pushing a wireless notification with respect to the submitted carpool schedule change, email server communicably linked to wireless carpool scheduling server via Internet for transmitting the email notification. The plurality of mobile devices receive the email notification and the wireless notification.

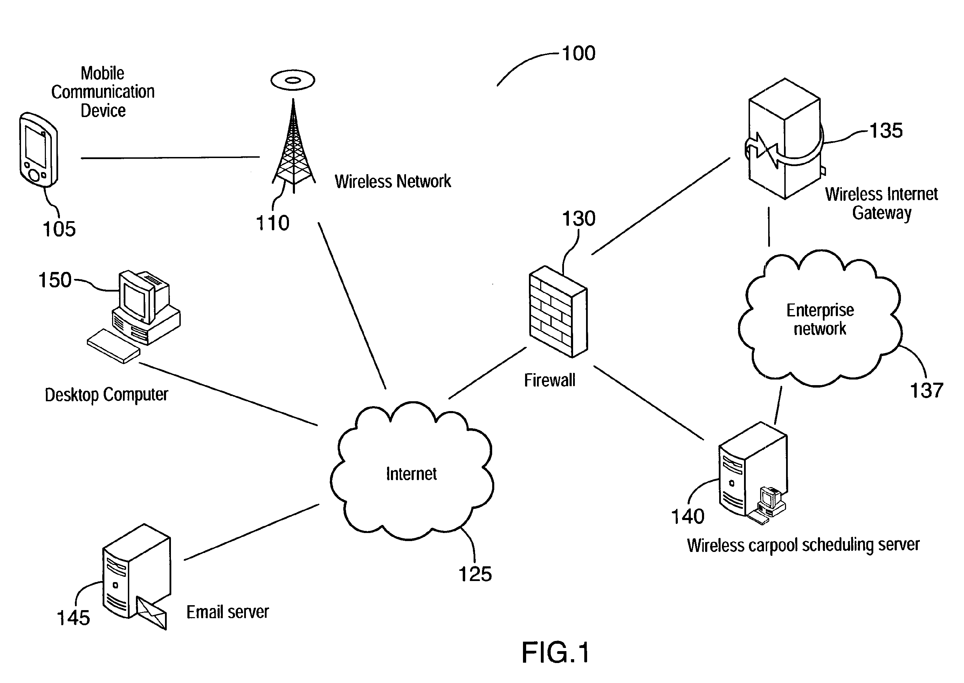

Fig. 1 is a block diagram of a wireless carpool scheduling system according to an embodiment of the present application. The exemplary system 100 includes a plurality of mobile communication devices that are collectively referred to mobile communication device 105. Depending on the functionality provided by the device, the device may be referred to as wireless handheld communication device, a data messaging device, a cellular phone with data messaging capabilities, a wireless Internet appliance or a data communication device (with or without telephony capabilities). The mobile communication device 105 is preferably two-way wireless communication devices having voice and data communication capabilities. Thus, for example, the devices may communicate over a voice network such as any of the analog or digital cellular networks, and may also communicate over a data network.

Voice and data network are depicted in Fig 1 by wireless network 110, which may be separate communication networks using separate infrastructure, such as base stations, network controllers, etc. or they may be integrated into a single wireless network. References to the wireless network 110 should therefore be interpreted as encompassing both a single voice and data network or separate networks.

Mobile communication device 105 is linked to wireless Internet gateway 135 located behind security firewall 130 through wireless network 110 and Internet 125. Enterprise network 137 is located between wireless Internet gateway 135 and wireless carpool scheduling server 140 for serving a plurality of mobile device users. Enterprise network 137 may be a packet-switched network, can include one or more geographic sites and be organized as a local area network (LAN) , wide area network (WAN) , metropolitan area network (MAN) or the like.

A number of personal computers such as desktop computers, laptop computers, palmtop computers and the like, which generically and collectively referred to herein and depicted as desktop computer 150, may be operably networked to Internet 125 for communicating with wireless carpool scheduling server 140 and mobile communication device 105. Email server 145 receives/sends emails from/to mobile device 105 and desktop computer 150 with respect to carpool information. Carpool information including adding a new carpool, removing a carpool, updating a carpool, a carpool schedule, a carpool schedule change, a driver change and the like is instantly notified to all carpoolers by an email notification and a wireless notification.

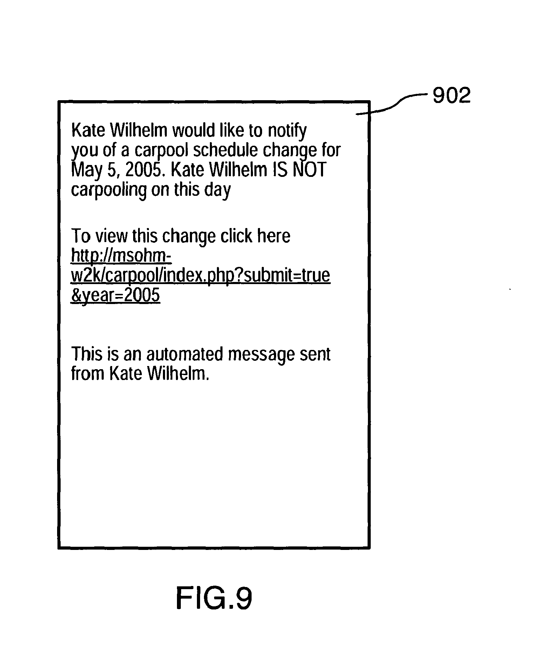

The email notification is an automatically generated email. An exemplary email notification example is shown in Fig. 9. In Fig. 9, Email text 902 provides a message about a carpool schedule change on some day and a link to a carpool schedule web page.

The wireless notification is pushed to a carpool application on mobile device 105 from wireless carpool scheduling server 140. The wireless notification includes a web web page such as a carpool schedule page and two icons. The two icons include an icon with a read status and an icon with an unread status icon. Either icon may be displayed on mobile the device 105. When a new wireless notification arrives, the icon shows an unread status. When the icon is clicked, a browser is launched and a web page such as a carpool schedule web page is loaded, and the icon is switched to a read status.

A carpooler can set up a profile of a wireless notification on his/her mobile device as loud, vibrate, quiet or default, and set up tune, volume and number of beeps. When a wireless notification arrives, a corresponding reminder sound reminds the carpooler. An email notification can be set up with a similar process as above.

In another embodiment, desktop computer 150 and email server 145 may be located behind security wall 130 for coupling to enterprise network 137 and exchanging information with wireless carpool scheduling server 140 and mobile device 105 securely.

Wireless carpool scheduling server 140 provides carpool scheduling services, and stores carpool data. A lead carpooler or an administrator is responsible for managing carpool such as adding a carpool, removing a carpool and updating a carpool by accessing a carpool administration web page from desktop computer 150. A number of carpool groups can be managed with an administration web page, thus wireless carpool scheduling server 140 stores carpool data related to a number of carpool groups. For example, it stores a number of carpool schedules and corresponding driving schedules, wherein each carpool schedule and each driving schedule correspond to a carpool group. Wireless carpool scheduling server 140 provides an administration web page, a carpool schedule web page, a driving schedule web page, a carpool group list web page, a carpooler information request web page, an carpool update web page, change carpool status web page, a change driving status web page or other carpool related web pages in response to a corresponding request from desktop computer 150 or mobile communication device 105.

A carpooler can access system 100 from either a web browser or a wireless application on wireless handheld device 105. The web browser may be any existing web browser such as Internet Explorer or other web browsers. Similarly, the system can also be accessed from desktop computer 150. An administration web page is preferably only accessed by a leader carpooler or an administrator from desktop computer 150. The following will take a carpool schedule change as an example to describe how the carpool scheduling system works.

When a carpooler requests a carpool schedule web page for making a carpool schedule change from a web browser or a carpool application on mobile communication device 105, a carpool schedule web page is loaded from the cache of mobile communication device 105. The carpooler makes a schedule change and submits the changed schedule. The changed schedule is sent from wireless handheld 105, over wireless network 110, Internet 125, firewall 130, wireless Internet Gateway 135 and enterprise network 137, to wireless carpool scheduling server 140. If the schedule is different from the current one, server 140 saves the new schedule, sends an email to all carpoolers in a carpool group through email server 145, and pushes a wireless notification to all carpoolers in the carpool group on their mobile devices. This wireless notification is pushed from server 140 to enterprise network 137, wireless Internet gateway 135, over Internet 125 to wireless network 110 and then to the mobile device 105.

Similarly, when a carpooler requests a carpool schedule web page from desktop computer 150, a carpool schedule web page is loaded from the cache of desktop computer 150. The carpooler makes a schedule change and submits the changed schedule. The changed schedule is sent from desktop computer 150, over Internet 125, firewall 130 and enterprise network 137, to wireless carpool scheduling server 140. Server 140 saves the different new schedule, sends an email to all carpoolers in a carpool group through email server 145, and pushes a wireless notification to all carpoolers in the carpool group on their mobile devices.

Regarding a driver change, adding a carpool removing a carpool or updating a carpool, a similar communication link is established as above. Adding a carpool, removing a carpool and updating a carpool are only accessed and managed by a lead carpooler or a carpool administrator. A carpool schedule change and a driver change can be accessed and changed by all carpoolers in a group so that any schedule change and driver change are communicated to all carpoolers instantly and the carpool proceeds smoothly.

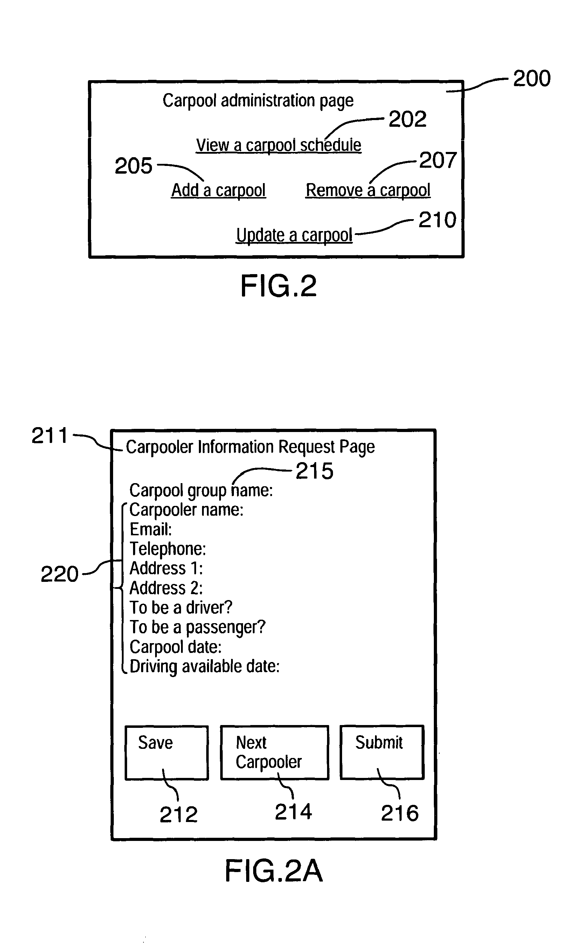

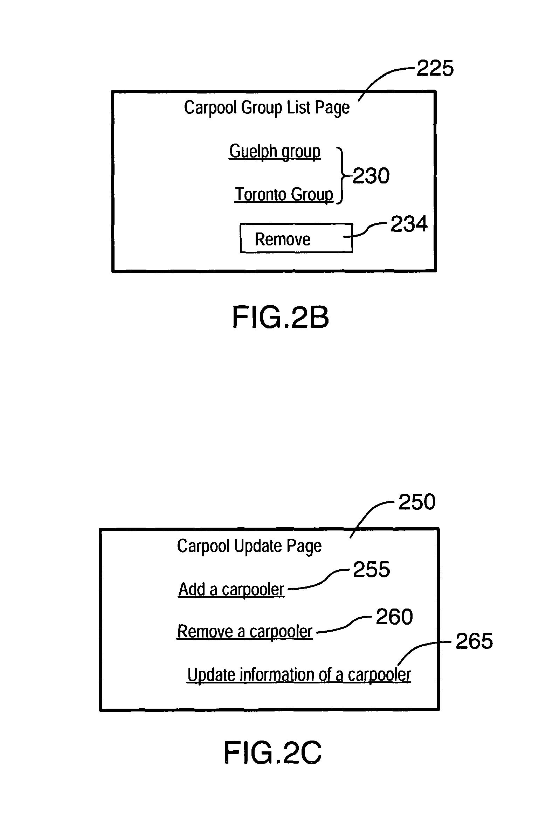

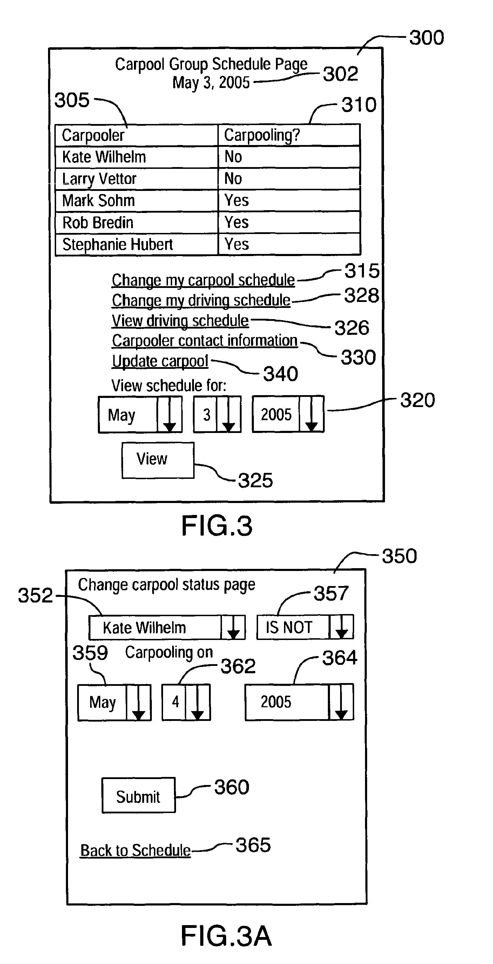

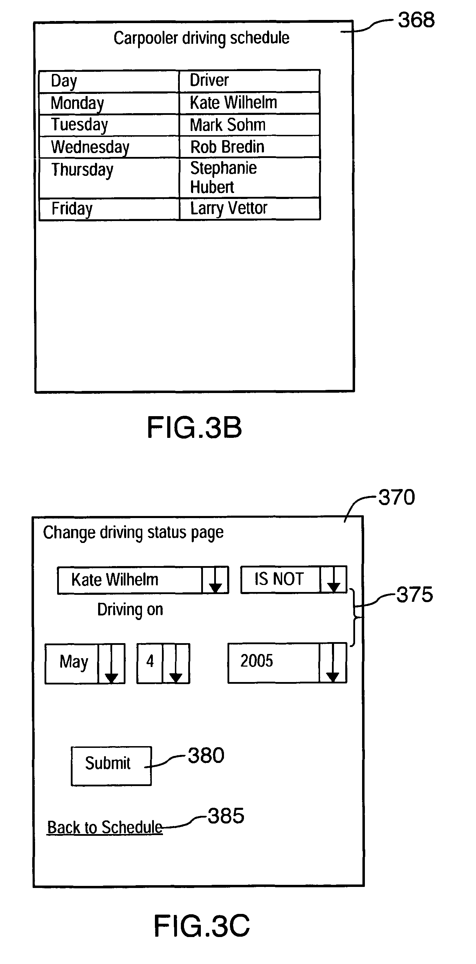

A carpool administration web page is used to add a carpool for a group of people, remove a carpool and update an existing carpool. As shown in Fig. 2, an exemplary carpool administration web page 200 comprises add a carpool 205, remove a carpool 207, update a carpool 210 and view a carpool schedule 202 links. They are linked to the corresponding web pages. When adding a carpool, a lead carpooler clicks add a carpool 205, and then a carpooler information request web page 211 presents as shown in Fig. 2a. In Fig. 2a, group name 215 may be entered a carpool group name that a carpooler will join, for example, Toronto, Ottawa or other names. Carpooler information 220 may be entered each carpooler's information including name, email address, home telephone number, office telephone number, cell phone number, carpool address 1, carpool address 2, to be a driver or passenger, carpool date, driving available date and the like. Save button 212 and next carpooler button 214 are used to save each carpooler's information and enter next carpooler's information. After each carpooler's information has been entered, the information is submitted by pressing submit button 216 and a group carpool schedule as shown in Fig. 3c is created according to a predetermined routine.

Fig. 2b shows a carpool group list web page 225 including a list of carpool groups such as Guelph group and Toronto group. Once a new carpool is created, list 230 is updated to add the new carpool group. Each group carpool schedule can be accessed from list 230 by clicking on it.

The carpool group list web page 225 includes a remove button 234 for removing an existing carpool. A lead carpooler opens up administration web page 200 and click on remove a carpool 207, and then the web page 200 is linked to carpool group list web page 225. A carpool group is removed by clicking remove a carpool 234. Carpool data related to the carpool group is also removed from wireless carpool scheduling server 140.

Update a carpool 210 shown in Fig. 2 is used to update an existing carpool. When update a carpool 210 is clicked, it is linked to carpool group list web page 225 for a lead carpooler to select a group for updating. For example, Guelph group is selected, and then a Guelph carpool schedule web page 300 is shown as Fig. 3. Update web page 250 as shown in Fig. 2c is displayed by clicking update carpool 340 of Fig. 3. Update web page 250 comprises three links that are add a carpooler 255, remove a carpooler 260 and update the information of a carpooler 265. When add a carpooler 255 is clicked, carpooler information request web page 211 is displayed for a lead carpooler to enter a new carpooler's information or updating an existing carpooler. When remove a carpooler 260 is clicked, a carpooler list web page (not shown) is displayed and a carpooler can be removed by selecting a name and pressing the remove button on the carpooler list web page. When update the information of a carpooler 265 is clicked, a carpooler list web page is displayed, and then a carpooler information web page (not shown) can be displayed by selecting a name and clicking an edit link, for example. Updated information of a carpooler can be entered and submitted, and an updated carpool schedule is created by a predetermined routine.

Fig. 3 shows an exemplary carpool schedule 300 on a given date 302. Carpooler column 305 lists each carpooler's name in a group, and carpooling column 310 provides information on carpooling or not. Change my carpool status 315 in Fig.3 is linked to change carpool status web page as shown in Fig. 3a where a carpooler can change his/her carpool schedule by selecting name, carpool status "is not" or "is", and carpool date from fields 352, 357, 359, 362, and 364, and then pressing submit button 360. Accordingly, the changed carpool schedule is notified to all carpoolers in a group by an automatic email and a wireless notification instantly. Back to schedule 365 is used to navigate back to a carpool schedule web page if the carpooler does not want to change their carpool status. Pooler contact information 330 provides all carpooler's contact information that may include office phone number, home phone number, cell phone number, carpool address 1, carpool address 2, etc.

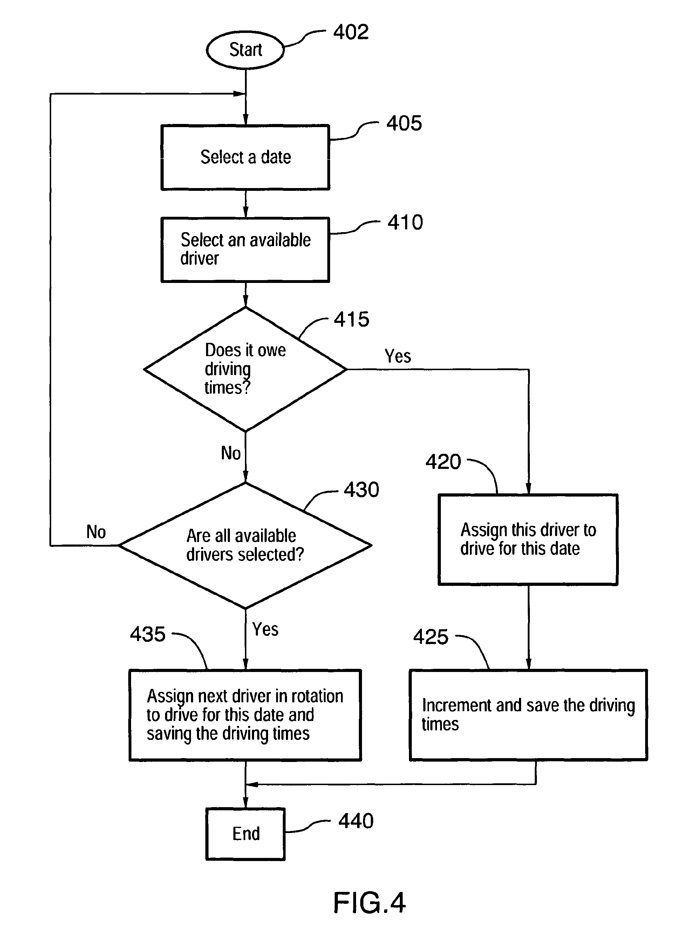

A carpooler can view a carpool schedule on a given day by selecting a date from field 320 and clicking button 325. Viewing Driving Schedule 326 provides a link to a carpooler driving schedule web page as shown in Fig. 3b. From the carpooler driving schedule web page 368, a carpooler can view who is driving in a week. The driver schedule is arranged by weekday. Alternatively, it can be arranged by Ad date. Change my driving schedule 328 provides a link to change driving status web page 370 as shown in Fig. 3c for changing a driver's driving status. By selecting items from field 375 and clicking on submit 380, a carpooler can change his/her driving status. When a carpooler updates his/her driving status from driving to not driving, a driver assignment process is started to assign a carpooler who owes driving days to drive on that day, and the change is notified to all carpoolers by an email notification and a wireless notification instantly. A driver schedule can be created by the driver assignment process, which will be described below with reference to Fig. 4.

Fig. 4 is a flowchart of an exemplary driver assignment process. The process assigns who will be driving on a given day based on availability and previous driving records. The drivers are rotated so that all carpoolers drive an equal number of times and no single driver is required to drive for a lengthy continuous period of time. The process starts at step 402. A driving date is selected at 405, and an available driver from the carpoolers who can drive is selected at 410. At step 415, it is determined if no other drivers drove fewer times than the selected available driver, that is, it is determined if the driver owes driving times. If the driver owes driving times, the driver is assigned to drive for the date at 420. In step 425, driving times of the driver is increased one and stored. If no other drivers drove fewer times than the selected available driver, that is, the driver does not owe driving times, the process proceeds to step 430 and determines if all available drivers have been selected and determined. If no, the process returns to step 410, and if yes, the process assigns a driver in rotation to drive for this date. The carpool group can determine the period of rotation such as daily or weekly. The process ends at 440.

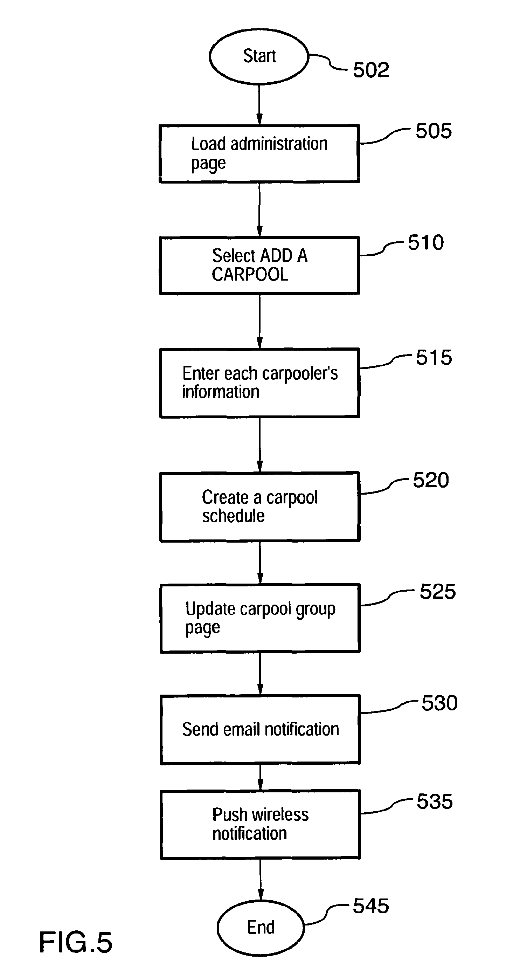

Fig. 5 shows a flowchart of adding a carpool according to an embodiment of the present application. A carpool for a group of people can be created by means of the following steps. The process starts at step 502, and loads administration web page at step 505. There are four links on the administration web page including view a carpool schedule, add a carpool, remove a carpool and update a carpool. Add a carpool is selected at 510, and each carpooler's information is entered at 515. The carpooler's information includes, for example, name, email, phone number, carpool start address, carpool end address, to be driver or passenger, carpool date, driving available date, carpool group name and so on. At step 520, a new carpool is created and saved in the server based on the information entered at step 515. Once a carpool for the group is created, an email notification and a wireless notification are sent to all carpoolers in the group through a wireless network 110 at step 525 and step 530 respectively. At step 535, the process logs out from the administration web page and ends at 545.

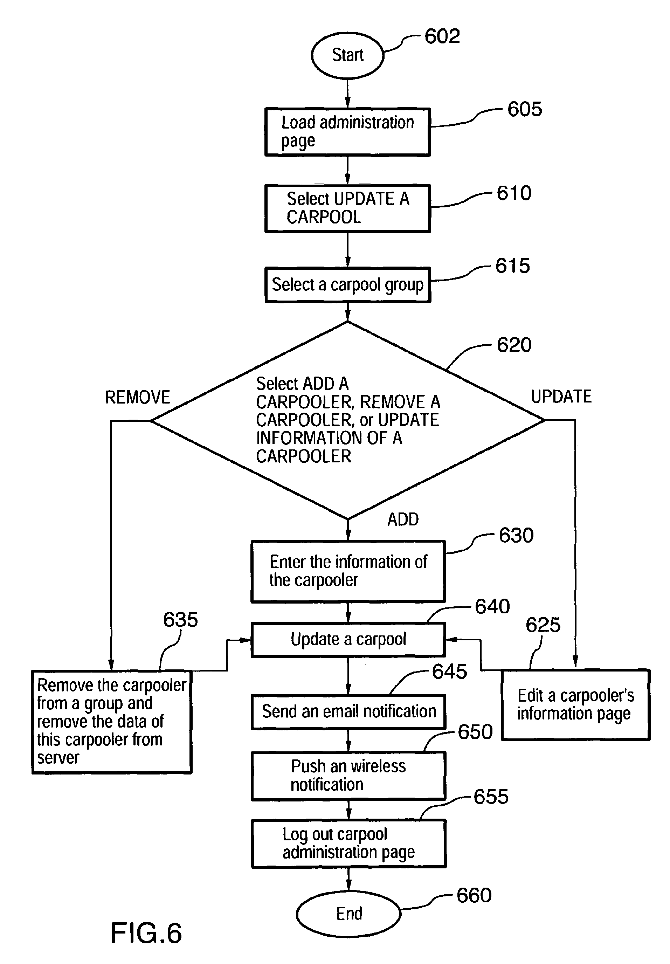

Fig. 6 is a flowchart of updating a carpool according to the present application. Sometimes, it is required to change a carpooler's information or a carpool that already exists. For instance, a carpooler wants to change personal information such as address, name or phone number, and a carpooler leaves a carpool or a new carpooler joins a carpool, an update process is required to implement the changes.

The process starts at 602, and loads the administration web page at step 605. The administration web page includes update a carpool link, and update a carpool is selected at 610. The process proceeds to next step where a carpool group web page including a list of carpool groups is displayed and a carpool group in which an update would perform is selected at 615. At step 620, it is determined which one is selected from update the information of a carpooler, add a carpooler or remove a carpooler. If update the information of a carpooler is selected, an existing carpooler's information web page is selected and edited, and then the edited carpooler's information is saved at step 625. The process proceeds to step 640 where a carpool update is done. An email notification and a wireless notification signal are instantly sent to all carpoolers in the group at step 645 and step 655 respectively. The carpoolers are informed of the changes via their mobile devices or their desktop computers immediately. The process logs out from the administration web page at 655 and ends at 660.

If add a carpooler is selected at 620, a carpooler information request web page is displayed, and the carpooler's information is entered and saved at step 630. The process proceeds to step 640 where an updated carpool is created. If remove a carpooler is selected at 620, the carpooler is removed from a carpool group, the carpooler's information is removed from the wireless carpool scheduling server at 635, and then an updated carpool is done at step 640. The updated information is sent to all carpoolers by an email notification and a wireless notification instantly in step 645 and step 650.

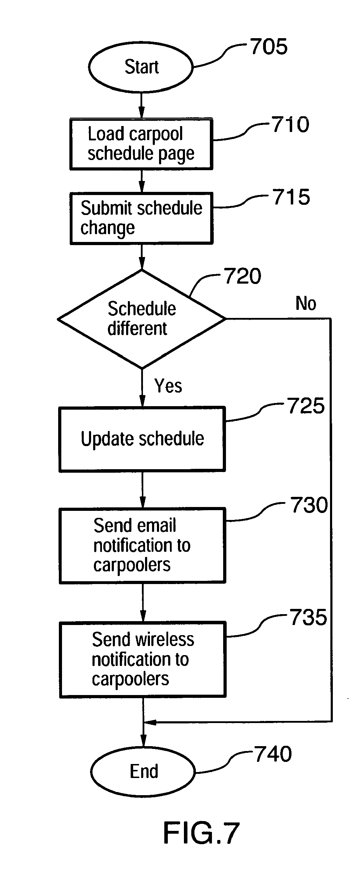

Fig. 7 shows a flowchart of a carpool schedule change process according to the present application. The process starts at 705, and loads and opens a carpool group schedule web page at 710. By linking to change my carpool status web page from the carpool group schedule web page, a carpooler selects his/her name and a date and toggles their status as carpooling or not carpooling and submits at 715. At step 720, it is determined if the schedule is different from the previous schedule, and if yes, the process proceeds to step 725 where a carpool schedule is updated. At step 730, an email notification is sent to all carpoolers in a carpool group. A wireless notification is pushed to a carpool application on mobile communication devices of carpoolers in the group at 735, the carpooler can access the wireless notification by clicking a carpool icon with an unread status on the screen of his/her mobile device or can check email on the mobile phone. If the carpooler does not get the email on the mobile device, the wireless notification is an indication that a schedule changed. With two notifications, an email notification and a wireless notification, it is ensured carpoolers can be notified any change timely. The process ends at 740.

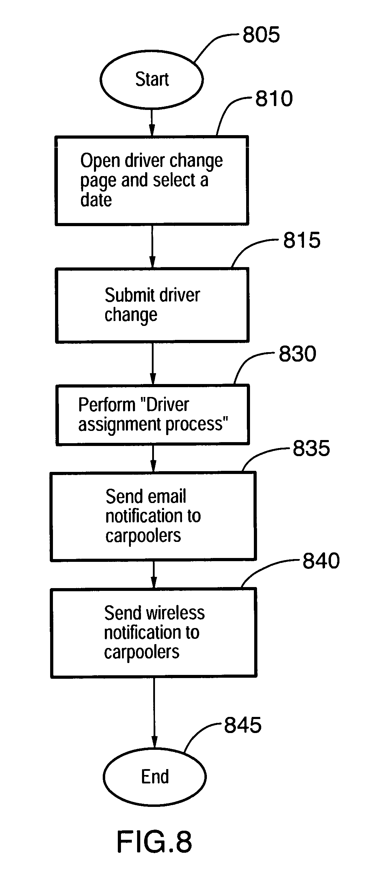

Fig. 8 shows a flowchart of a driver schedule change process according to an embodiment of the present application. There are times a carpooler is unable to drive as scheduled, for example, the carpooler is sick, or his vehicle is down or can not ignite in cold weather in last minutes, it is required to notify other carpoolers soon and change a driver. The process is similar to a carpool schedule change, and starts at 805. At step 810, a carpool group schedule web page is loaded by means of an application or a web browser on a wireless handheld device. Linking to change driving status web page from the carpool group schedule web page, a carpooler selects his name, a date, not driving. A driver change is submitted at 815. The process invokes and performs the driver assignment process as shown in Fig. 5 at step 830. An email notification and a wireless notification are sent to all carpoolers at step 835 and step 840 respectively. A carpooler can access the wireless notification by clicking a carpool icon and loading the updated carpool schedule web page on his/her mobile device. The icon is displayed on the screen of the mobile device and linked to a carpool application. When a new wireless notification arrives, the icon is changed to an unread status. The carpool can know it is a new wireless notification. If the carpooler does not get the email on the mobile device, the wireless notification is an indication that a schedule changed. With two notifications, an email notification and a wireless notification, it is ensured carpoolers can be notified any change timely. The process ends at 845.

The size of a web page displayed on the screen of a mobile device can be set up to fit the screen of a mobile device.

According to present application, a carpooler can view the carpool status of all carpoolers in the carpool for any given date. This allows a single point of reference for all carpoolers to check the status of their peer at any time. Any changes to a carpool schedule will result in all carpoolers being instantly notified through email and a wireless notification to their mobile devices.

The above-described embodiments of the present application are intended to be examples only. Alterations, modifications and variations may be effected to the particular embodiments by those of skill in the art without departing from the scope of the invention, which is defined solely by the claims appended hereto.

## Claims

1. A method of wireless carpool scheduling for notifying a carpool schedule change for a group of carpoolers, comprising the steps of
loading a carpool schedule web page (300) by a carpool application;
submitting a schedule change (350);
updating the carpool schedule web page;
sending an email notification to the group of carpoolers; and
pushing a wireless notification to a plurality of mobile devices (105) owned by the group of carpoolers.

2. The method of claim 1, wherein the carpool application is on a mobile device (105).

3. The method of claim 1, wherein the carpool application is on a desktop computer (150).

4. The method of claim 1, wherein the schedule change comprises one of carpool status change of a carpooler and a driver schedule change.

5. The method of claim 4, wherein the carpool status change of a carpooler is one of a change from carpooling to not carpooling on a given date and a change from not carpooling to carpooling on a given date.

6. The method of claim 4, wherein the driver schedule change is a change from driving to not driving on a given date.

7. The method of claim 6, further comprising a step of performing a driver assignment routine, and wherein a driver is assigned based on previous driving times of each driver.

8. The method of claim 1, wherein the carpool application is accessed from an icon displayed on a screen.

9. The method of claim 1, wherein the carpool application is accessed from a web browser.

10. The method of claim 1, wherein the carpool schedule web page (300) comprises carpool date (302), names of the carpoolers in the group (305), carpool status of each carpooler (310), a link to change carpool status (315), a link to change driving status (328), a link to update carpool (340), a link to view a driving schedule (326), a link to view the contact information of the carpoolers (330), and a link to view carpool schedule any available day (325).

11. The method of claim 1, wherein the email notification comprises an automatically generated email (902) with respect to the carpool schedule change and a reminder sound.

12. The method of claim 1, wherein the wireless notification comprises an icon with an unread status, an icon with a read status and a carpool schedule web page.

13. The method of claim 12, wherein the icon with unread status is displayed on the screen of the mobile device when the wireless notification arrives at a mobile device, and the icon with read status is displayed on the screen of the mobile device when the carpool schedule web page is opened.

14. The method of claim 1, where the mobile device is selected from the group consisting of: wireless handheld communication device, a data messaging device, a cellular phone with data messaging capabilities, a wireless Internet appliance, a data communication device with telephony capabilities and a data communication device without telephony capabilities.

15. A method of wireless carpool scheduling for adding a carpool for a group of carpoolers, comprising the steps of
loading a carpool administration web page (200) by an carpool application on a desktop computer (150);
entering the carpool information for each carpooler of the group;
generating a carpool schedule web page including a carpool schedule;
sending an email notification to the group of carpoolers; and
pushing a wireless notification to a plurality of mobile devices (105) owned by the group of carpoolers.

16. The method of claim 15, further comprising the step of
updating a carpool group web page (225), wherein the carpool group web page includes a list of carpool groups for accessing each carpool group (230).

17. The method of claim 15, wherein the wireless notification comprises an icon with an unread status, an icon with a read status and a carpool schedule web page.

18. The method of claim 15, wherein the carpool application is accessed from a web browser.

19. A method of wireless carpool scheduling for updating a carpool for a group of carpoolers, comprising the steps of
loading a carpool administration web page (200) by a carpool application on a desktop computer (150);
updating a carpool schedule web page (300);
sending an email notification to the group of carpooler; and
pushing a wireless notification to a plurality of mobile devices (105) owned by the group of carpoolers.

20. The method of claim 19, wherein the step of updating a carpool schedule comprises the steps of
accessing a link to add a carpooler; and
entering the carpool information of the carpooler.

21. The method of claim 19, wherein the step of updating a carpool schedule comprises the steps of
accessing a link to update the information of a carpooler (210); and
entering the updated information of the carpooler.

22. The method of claim 19, wherein the step of updating a carpool schedule comprises the steps of
accessing an link to remove a carpooler (207); and
removing the carpooler from the group.

23. The method of claim 19, wherein the wireless notification comprises an icon with an unread status, an icon with a read status and a carpool schedule web page.

24. A system of wireless carpool scheduling for serving one or more group of carpoolers, comprising
a plurality of mobile devices (105) for loading a carpool schedule web page (300) corresponding to a carpool group by a carpool application and submitting a schedule change;
a wireless network (110) communicably linked to the plurality of mobile devices (105);
wireless carpool scheduling server (140) communicably linked to the wireless network (110) for storing and providing carpool data related to one or more group of carpoolers, receiving the submitted schedule change and sending an email notification and pushing a wireless notification with respect to the submitted schedule change;
email server (145) communicably linked to wireless carpool scheduling server (140) via Internet (125) for transmitting the email notification, and
wherein the plurality of mobile devices receive the email notification and the wireless notification.

25. The system of claim 24, wherein the schedule change comprises one of a carpool status change and a driving status change.

26. The system of claim 24, further comprising
desktop computer (150) communicably linked to the wireless carpool scheduling server (140) for loading an carpool administration web page (200) by the carpool application and submitting a carpool change, and
wherein the wireless carpool scheduling server (140) stores the carpool administration web page and a plurality of web pages associated with one or more carpool groups and receives the submitted carpool change and sending an email notification and pushing a wireless notification with respect to the submitted carpool change, and the plurality of mobile devices (105) receive the email notification and the wireless notification with respect to the submitted carpool change.

27. The system of claim 24, wherein the carpool application is accessed from a web browser.

28. The system of claim 26, wherein the carpool application is accessed from a web browser.

29. The system of claim 26, wherein the carpool change comprises adding a carpool, removing a carpool and updating a carpool.

30. The system of claim 29, wherein updating a carpool comprises adding a carpooler to the carpool and removing a carpooler from the carpool.

31. The system of claim 26, wherein the plurality of web pages associated with one or more carpool groups comprises one or more group carpool schedule web pages, a carpool group list web page, a carpooler information request web page, a carpool update web page, one or more group carpooler driving schedule web pages, one or more group change carpool status web pages and one or more group change driving status web pages.

32. The system of claim 24, wherein the email notification comprises an automatically generated email with respect to the carpool schedule change and a reminder sound.

33. The system of claim 24, wherein the wireless notification comprises an icon with an unread status, an icon with a read status and a carpool schedule web page.

34. The system of claim 24, wherein the icon with unread status is displayed on the screen of the mobile device when the wireless notification arrives at a mobile device, and the icon with read status is displayed on the screen of the mobile device when the carpool schedule web page is opened.
